# EUROPÄISCHE PATENTSCHRIFT

(11) **EP 1 057 394 B1**
(45) Veröffentlichungstag und Bekanntmachung des Hinweises auf die Patenterteilung: **26.06.2002**
(21) Anmeldenummer: 00111621.9
(22) Anmeldetag: 31.05.2000
(51) Int. Cl.: A01B 61/04

(54) **Halterungsanordnung**
Fixing device
Dispositif de fixation

(30) Priorität: 03.06.1999 US 325454
(43) Veröffentlichungstag der Anmeldung: 06.12.2000
(73) Patentinhaber: DEERE & COMPANY, Moline, Illinois 61265-8098 (US)
(72) Erfinder: Hook, Richard Wayne, West Des Moines, IA 50265 (US); Zaun, Richard David, West Des Moines, IA 50265 (US)
(74) Vertreter: Holst, Sönke, Dr.

(56) Entgegenhaltungen:
- FR-A- 2 498 875
- US-A- 2 462 641
- US-A- 2 627 798
- US-A- 3 536 146
- US-A- 4 249 615

## Beschreibung

Die Erfindung betrifft eine Halterungsanordnung, die zur Befestigung an einem Werkzeugträger und zur Halterung eines Bodenbearbeitungswerkzeugs eingerichtet ist, mit einer spiralförmigen Feder, einer an einem ersten Ende der Feder anliegenden Fläche, einem gegen die Kraft der Feder aus einer Bodenbearbeitungsposition in eine Ausweichposition schwenkbaren Schaft, der mit dem Bodenbearbeitungswerkzeug verbindbar ist, und der mit einer am zweiten Ende der Feder anliegenden Fläche in Wirkverbindung steht.

Gefederte Halterungsanordnungen umfassen in der Regel eine an einem Werkzeugträger mit rechteckigem Querschnitt angebrachte Klammer, die sich nach hinten und oben zu einer nach unten und vorn gerichteten ersten Federanlagefläche erstreckt. Eine Feder wird zwischen der Federanlagefläche und einer nach oben gerichteten Federanlagefläche eines schwenkbar am unteren Abschnitt der Klammer angelenkten Trägerelements zusammengedrückt. Ein werkzeugtragender Schaft ist an dem Element befestigt. Wenn das Werkzeug auf Hindernisse trifft, schwenken das Trägerelement und der Schaft gegen die Vorspannung der Feder nach oben, so dass sich das Werkzeug über das Hindernis bewegen kann. Der Winkel zwischen der unteren Federanlagefläche und der Mittellinie der Feder ändert sich, wenn das Trägerelement nach oben verschwenkt. Die Änderung des Winkels führt zu Verbiegungskräften der Feder und bedingt, dass sich die Feder kurvenförmig verbiegt, wobei die unterste Windung der Feder weiterhin an der Federanlagefläche in Anlage bleibt. Die Verbiegung der Feder vermindert die Effektivität der Feder und kann vorzeitiges Brechen der Feder zur Folge haben.

Um die Komplexität der Halterungsanordnung zu vermindern und die Herstellungszeiten und -kosten zu reduzieren, weisen einige gefederte Halterungsanordnungen integrierte Anschläge auf, so dass sich eine sich durch die Windungen der Spule erstreckende Spannungsverbindung erübrigt. Eine derartige Halterungsanordnung ist in der US-Patentanmeldung 09/216,270 vom 18. Dezember 1998 und der deutschen Patentanmeldung DE 19956953 offenbart. Die Spannungsverbindung stellt jedoch ein integriertes Element zur Führung der Feder bereit, die ein übermäßiges Verbiegen der Feder vermeidet. Daher sind Halterungsanordnungen ohne derartige Verbindungen eher Verbiegungsproblemen der Feder ausgesetzt.

Bei manchen Halterungsanordnungen, wie z. B. in der US 4 520 878 A dargestellt, sitzt die Unterseite der Feder auf einem Sitz, der schwenken kann, um die Unterseite der Feder im wesentlichen senkrecht zur Längsachse der Feder zu halten, und dadurch Federverbiegungskräfte zu vermindern. Bei einem anderen Typ einer Halterungsanordnung, wie sie in der US 3 700 039 A gezeigt ist, ist das untere Ende der Feder frei auf einem Haltebolzen drehbar, so dass es stets senkrecht zur Mittellinie der Feder bleibt. Derartige Anordnungen erfordern eine Vielzahl an Komponenten und sind relativ schwierig zusammenzusetzen. Die schwenkbare Sitzkonstruktion und die Haltebolzenanordnung bringen zusätzliche Verschleißkomponenten in den Zusammenbau ein.

Es ist daher Aufgabe der vorliegenden Erfindung, einen verbesserten Halterungszusammenbau für ein Bodenbearbeitungswerkzeug bereitzustellen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die erfindungsgemäße Halterungsanordnung für ein Bodenbearbeitungswerkzeug umfasst eine spiralförmige Feder, die zwischen zwei Flächen eingeklemmt ist. An einem äußeren Ende eines quer zur Vorwärtsbewegungsrichtung schwenkbaren Schafts ist ein Werkzeug direkt oder indirekt angebracht. Eine der beiden an den Federenden anliegenden Flächen ist am schwenkbaren Schaft vorgesehen oder mit ihm verbunden, und eine ist stationär, in der Regel mit dem Werkzeugträger verbunden, und dreht sich nicht mit dem Schaft mit. Die Feder spannt den Schaft in seine normale Bodenbearbeitungsposition vor. Stößt das Werkzeug auf ein Hindernis, verschwenkt es den Schaft gegen die Kraft der Feder in eine Ausweichposition. Dabei wird die Feder in der Regel zusammengedrückt.

Der Kerngedanke der Erfindung besteht darin, mindestens eine der beiden Flächen, an denen die Feder anliegt, mit zwei Bereichen zu versehen. An einem ersten Bereich liegt die Feder an, wenn sich der Schaft in seiner Betriebsposition befindet. Dieser erste Bereich ist derart gestaltet, dass die Feder nicht verbogen ist, d. h. nicht in einer sich quer zu der Richtung, in der sie zusammengedrückt wird, erstreckenden Richtung verformt ist. Er verläuft bei in Bodenbearbeitungsposition befindlichem Schaft parallel zu der Fläche, an der das gegenüberliegende Ende der Feder anliegt. An dem zweiten Bereich der genannten Fläche liegt die Feder an, falls sich der Schaft in der Ausweichposition befindet. Auch der zweite Bereich ist derart geformt, dass die Feder nicht verbogen, sondern nur in ihrer Längsrichtung zusammengedrückt wird. Er verläuft bei in die Ausweichposition verbrachtem Schaft im wesentlichen parallel zur Fläche, an der das gegenüberliegende Ende der Feder anliegt. Der zweite Bereich schließt mit dem ersten Bereich einen Winkel ein. Man erreicht so eine im wesentlichen senkrechte Ausrichtung der jeweils am Ende der Feder anliegenden Fläche zur Mittellinie der Feder, sowohl in der Bodenbearbeitungsposition als auch in der Ausweichposition, so dass ein seitliches Verbiegen der Feder und ein vorzeitiges, durch Verbiegen bedingtes Brechen der Feder vermindert oder vermieden sind.

Auf diese Weise erhält man eine Halterungsanordnung, bei der die Nachteile des Standes der Technik nicht zu befürchten sind. Die auf die Feder wirkenden Verbiegungskräfte sind wesentlich reduziert. Auch ist die Halterungsanordnung aus relativ wenigen Teilen zusammengesetzt, und einfach und preiswert herstellbar. Eine schwenkbare Lagerung oder Auflagefläche der Feder oder eine sich durch die Windungen der Feder erstreckende Halterung der Feder, die ein übermäßiges Verbiegen verhindert, ist nicht erforderlich.

In der Regel weist die Halterungsanordnung eine Klammer auf, die an einem Werkzeugträger fixierbar ist. Die Klammer weist einen Schwenkbereich auf, an dem der Schaft schwenkbar gelagert ist. Vorzugsweise ist auch die Fläche, an der das erste Ende der Feder anliegt, an der Klammer vorgesehen, in der Regel oberhalb des und hinter dem Schwenkbereich. Diese Fläche ist - bei in der Bodenbearbeitungsposition befindlichem Schaft - senkrecht zur Längsachse der Feder orientiert. Das zweite Ende der Feder liegt an einer Fläche an, die mittelbar oder unmittelbar mit dem Schaft verbunden ist. Im konkreten ist sie eine Oberfläche des Schafts oder eines mit ihm verbundenen Elements, insbesondere eines Gussteils. Das Element kann weiterhin mit einer Anschlagfläche versehen sein, die sich vom Schwenkbereich nach vorn erstreckt und die Unterseite der Klammer berührt, um den Schwenkweg des Schafts in der normalen Bodenbearbeitungsposition zu begrenzen. In der Bodenbearbeitungsposition liegt die Anschlagfläche an der Klammer an. Auf diese Weise erreicht man, dass die Feder auch in der Bodenbearbeitungsposition vorgespannt ist. Eine separate Verbindung zwischen Klammer und Schaft zur Erzeugung einer Vorspannung der Feder erübrigt sich somit.

Der Schaft kann sich vom Schwenkbereich an der Klammer nach hinten und unten zu einem werkzeugtragenden Ende erstrecken. In diesem Fall bietet sich an, das zweite Ende der Feder an einer Fläche des Schafts anzuordnen, die sich hinter dem Schwenkbereich und unterhalb der am ersten Ende der Feder anliegenden Fläche, die mit der Klammer verbunden ist, befindet.

Die mit zwei Bereichen versehene Fläche ist vorzugsweise mit dem schwenkbaren Schaft verbunden, obwohl auch denkbar wäre, sie an der stationären Fläche vorzusehen. Möglich wäre auch, beide Enden der Feder an mit mindestens zwei Bereichen versehenen Flächen anliegen zu lassen, die ein Verbiegen der Feder in seitlicher Richtung vermeiden.

Weiterhin ist vorgeschlagen, dass der erste Bereich und der zweite Bereich in fester räumlicher Beziehung zueinander stehen, insbesondere aus einem einteiligen Element bestehen, oder aus zwei aneinander fixierten Elementen zusammengesetzt sind. Auf diese Weise sind keine bewegbaren, von Verschleiß betroffenen Elemente nötig. Vorzugsweise weist die Feder eine äußere Windung auf, die am ersten Bereich anliegt, wenn sich der Schaft in der Bodenbearbeitungsposition befindet, und die am zweiten Bereich anliegt, wenn er in der Ausweichposition ist.

Da Verbiegungskräfte auf die Feder durch den erfindungsgemäßen Aufbau der Halterungsanordnung vermieden sind, bietet sich an, die Feder zwischen ihren Endseiten mit offenen Windungen zu versehen, zwischen denen keinerlei Federkontrollstrukturen angeordnet sind.

In der Regel sind der erste Bereich und der zweite Bereich der an der Feder anliegenden Fläche jeweils flächig geformt, und schließen einen Winkel ein, der dem maximalen Schwenkwinkel des Schafts entspricht. Denkbar wäre, zwischen dem ersten und zweiten Bereich noch einen Zwischenbereich vorzusehen, der sowohl mit dem ersten als auch dem zweiten Bereich einen (vorzugsweise übereinstimmenden) Winkel einschließt. Auch ein kontinuierlicher (abgerundeter) Übergang zwischen ersten und zweitem Bereich wäre denkbar.

Schließlich wird vorgeschlagen, einen Vorsprung an einer oder beiden der Flächen vorzusehen, die an einem Ende der Feder anliegen. Der Vorsprung haltert die Feder in seitlicher Richtung und verhindert ein unbeabsichtigtes Herausspringen der Feder aus ihrer Lagerung.

In den Zeichnungen ist ein nachfolgend näher beschriebenes Ausführungsbeispiel der Erfindung dargestellt. Es zeigt:
- Fig. 1: eine Seitenansicht eines Halterungszusammenbaus, in der der Schaft in der normalen Bodeneingriffsposition (durchgezogene Linien) und in der Ausweichposition (gestrichelte Linien) gezeigt ist,
- Fig. 1a: eine vergrößerte Ansicht des in Figur 1 eingekreisten Bereichs des Halterungszuammenbaus,
- Fig. 2: eine vergrößerte Seitenansicht des Schwenklagergussteils des Halterungszusammenbaus der Figur 1,
- Fig. 3: eine Draufsicht auf das Schwenklagergussteil der Figur 2, und
- Fig. 4: eine Rückansicht des Schwenklagergussteils der Figur 2.

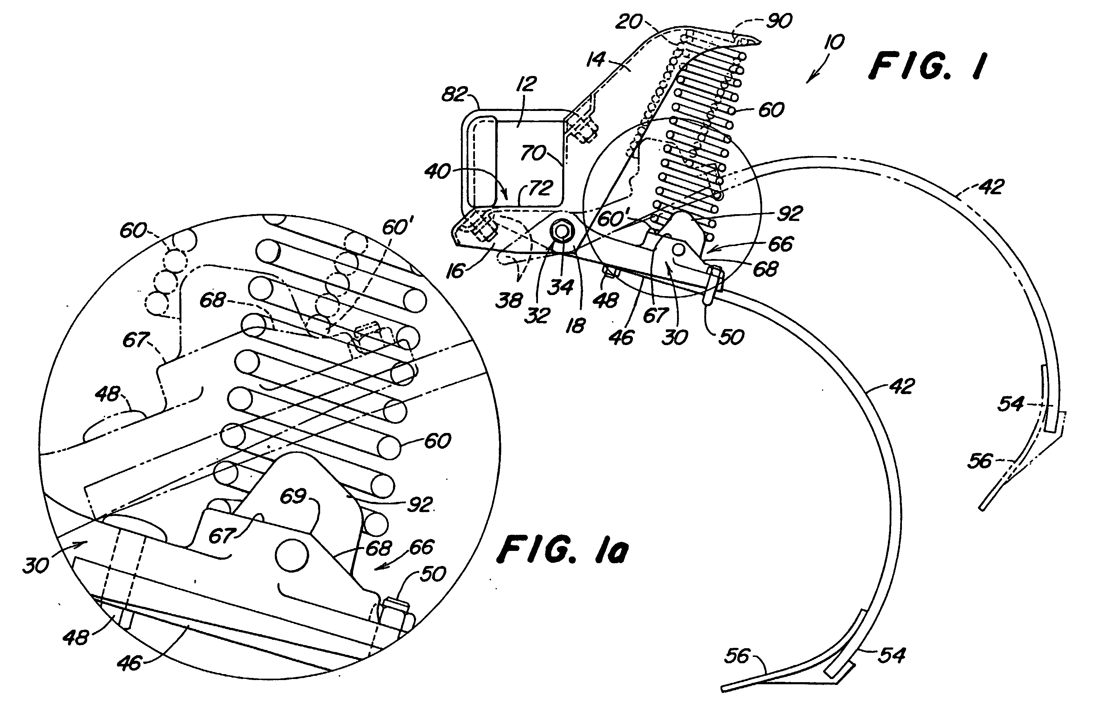

In Figur 1 ist ein Zusammenbau 10 einer mit einer Feder versehenen Halterungsanordnung eines Bodenbearbeitungsgeräts dargestellt, die mit einem sich quer erstreckenden Werkzeugträger 12 rechteckigen Querschnitts für Arbeitsgeräte verbunden ist. Der Zusammenbau 10 umfasst eine sich rückwärtig öffnende, kanalförmige Klammer 14 mit einem vorderen Befestigungsabschnitt 16, einem unteren hinteren Schwenkbereich 18 und einer oberen, an einer Feder 60 anliegenden Fläche 20, die rückwärtig und oberhalb des Schwenkbereichs 18 angeordnet ist.

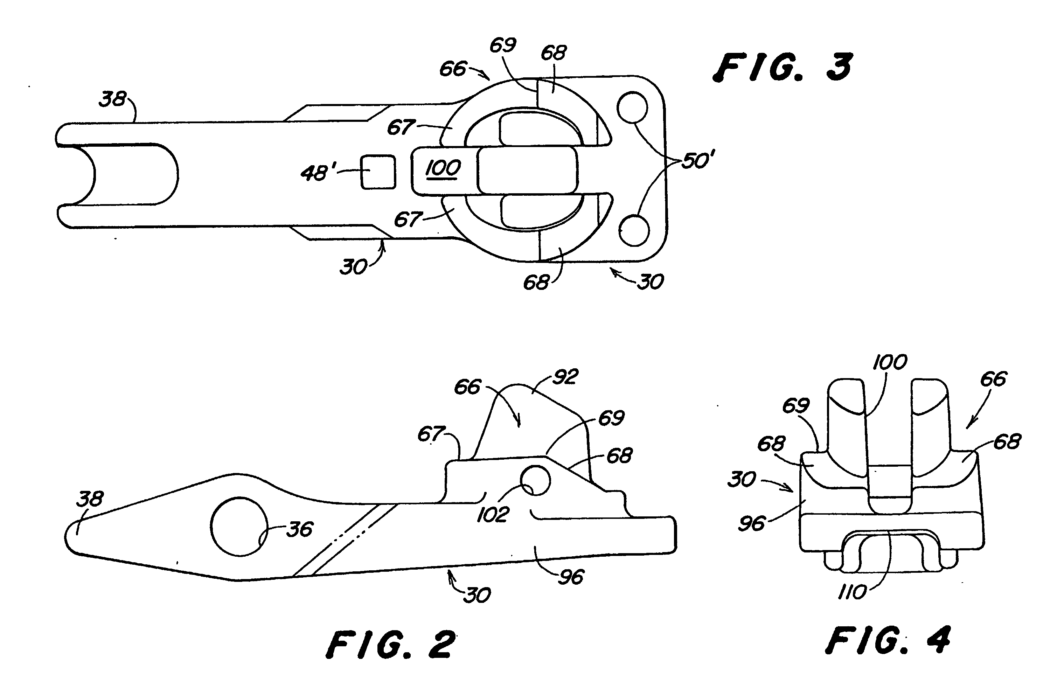

Ein Schaftträger in Form eines Gussteil 30 ist mit dem hinteren Schwenkbereich 18 durch einen eine Hülse und Muffe umfassenden Zusammenbau 32, der einen Befestigungsbolzen 34 mit verchromter Hülse aus Stahl umfasst, die sich durch eine Bohrung 36 (Figur 2) im Gussteil 30 zwischen den Seiten der Klammer 14 unterhalb der vorderseitigen, untersten Ecke des Befestigungsabschnitts 16 erstreckt, schwenkbar verbunden. Das Gussteil 30 umfasst eine sich von vorn nach hinten erstreckende Verlängerung 38, die von der Bohrung 36 und dem Schwenkbereich 18 nach vorn unter den Befestigungsabschnitt 16 vorspringt und einen insgesamt mit dem Bezugszeichen 40 gekennzeichneten unteren Anschlagbereich definiert, der ein Schwenken (des Gussteils 30) nach unten (in Figur 1 in Uhrzeigerrichtung) begrenzt, um eine vorausgewählte Bodeneingriffsposition, wie sie in Figur 1 in durchgezogenen Linien gezeigt ist, herzustellen. Ein C-förmiger Schaft 42 umfasst ein mit einer Öffnung versehenes oberes Ende 46, das durch einen Bolzen 48 an dem Gussteil 30 befestigt ist. Der Bolzen 48 erstreckt sich durch das obere Ende 46 und durch ein Loch 48` (Figur 3) im Gussteil 30. Ein U-förmiger Bolzen 50, der sich um den Schaft 42 und durch Löcher 50` im Gussteil 30 erstreckt, befestigt das obere Ende 46 am hinteren Ende des Gussteils 30. Der Schaft 42 verläuft vom oberen Ende 46 kurvenförmig nach unten und vorn zu einem untersten, zur Aufnahme eines Bodenbearbeitungswerkzeugs dienenden Ende 54, das ein Bodenbearbeitungswerkzeug oder eine Schaufel 56 trägt.

Eine spiralförmige Feder 60 ist frei zwischen der oberen, an der Feder 60 anliegenden ersten Fläche 20 und einer unteren, an der Feder 60 anliegenden Fläche 66 des Gussteils 30 ohne zusätzliche Zwangsmittel zusammengedrückt, unabhängig von einer Spannverbindung oder Federführungsstruktur innerhalb der Windungen der Spule. Die Feder 60 ist vorkomprimiert, um eine Federkraft bereitzustellen, mit der ein Bodenbearbeitungswerkzeug in der Arbeitsposition beaufschlagt ist, wobei der Anschlagbereich 40 sich am Anschlag befindet, wie -in Figur 1 mit durchgezogenen Linien dargestellt ist. Die Bodenbearbeitungsposition des Zusammenbaus 10 mit am Anschlag liegenden Anschlagsbereich 40 stellt eine optimale Arbeitsposition bereit, um den Boden zu durchstreichen. Die Vorspannung der Feder 60 in Verbindung mit der Wirkung des unteren Anschlagbereichs 40 belastet die Schwenklagerung, um Spiel im Hülse und Muffe aufweisenden Zusammenbau 32 zu vermeiden. Die an der Feder 60 anliegende Fläche 66 umfasst eine ersten die Feder aufnehmenden Bereich oder eine Oberfläche 67, der oder die im wesentlichen parallel zur oberen, an der Feder anliegenden Fläche 20 ist und die unterste Windung (60`) der Feder 60 abstützt, wenn sich der Schaft 42 in der Bodenbearbeitungsposition befindet und einen zweiten, die Feder aufnehmenden Bereich oder eine Oberfläche 68, der oder die im wesentlichen parallel zur Oberfläche 20 sind und die Windung 60` abstützt, wenn der Schaft 42 sich der obersten, aus der Normalposition verschwenkten (Ausweich-) Position nähert (gestrichelte Linien in den Figuren 1 und 1a). Die versetzten Bereiche 67, 68 sind durch einen Übergangsbereich 69 verbunden und verhindern ein übermäßiges Verbiegen der Feder 60, indem die unterste Windung 60` sowohl in der Bodenbearbeitungsposition als auch in der Ausweichposition senkrecht zur Mittellinie der Feder 60 gehalten wird.

Die kanalförmige Klammer 14 umfasst einen ausgesparten Bereich 70, der an den rückseitigen und unteren Flächen des Werkzeugträgers 12 anliegt. Der Schwenkbereich 18 ist unterhalb des rückwärtigen Abschnitts des ausgesparten Bereichs 70 angeordnet, und der Anschlagbereich 40 umfasst eine Klammerfläche 72 mit einer oberen Seite, die an der unteren Fläche des Werkzeugträgers 12 anliegt, um einen festen Anschlag für die Verlängerung 38 des Gussteils 30 bereitzustellen. Eine konventionelle Klammeranordnung 82 mit einem U-förmigen Bolzen erstreckt sich um den Werkzeugträger 12 und durch Öffnungen in der Klammer 14, um den Zusammenbau 10 am Werkzeugträger 12 zu befestigen.

Die obere, an der Feder 60 anliegende Fläche 20 der Klammer 14 umfasst eine kreisförmige Einpressung oder einen nach unten gerichteten Vorsprung 90, um das obere Ende der spiralförmigen Feder 60 an der Fläche 20 zentriert zu halten. Ein unterer, die Feder 60 halternder Vorsprung 92 erstreckt sich in der Nähe der Flächen 67 und 68 am Gussteil 30 von einer Basis 96 nach oben, um das Positionieren der Feder 60 relativ zur an der Feder 60 anliegenden Fläche 66 zu erleichtern. Die Basis 96 und der Vorsprung 92 sind geschlitzt, um eine sich von vorn nach hinten erstreckende Aussparung 100 zu definieren, die den Zusammenbau in der Fabrik erleichtert. Eine quer verlaufende Bohrung 102 erstreckt sich durch die Basis 96. Die Aussparung 100 und die Bohrung 102 erleichtern das Zerlegen und Zusammensetzen auf dem Feld, wenn nötig. Die Unterseite des Gussteils 30 umfasst einen sich von vorn nach hinten erstreckenden Hohlraum 110 (Figur 4), der sich nach hinten und unten öffnet und im wesentlichen der Form des oberen Endes 46 des Schaftes 42 entspricht. Eine dünne, gehärtete und geschlitzte Muffe ist in die Bohrung 36 gepresst und nimmt die verchromte Hülse aus Stahl und den Befestigungsbolzen 34 auf. Der Befestigungsbolzen 34 ist an den Seiten der Klammer 14 festgezogen und klemmt die Hülse aus Stahl ein, so dass die geschlitzte Muffe sich auf der stationären Hülse dreht. Daher entsteht der einzige im Schwenkbereich 18 auftretende Verschleiß an der Muffe und der Hülse aus Stahl, die relativ billig und leicht ersetzbar sind. Durch das Weglassen einer schwenkbaren unteren Klammer oder eines die unterste Windung der Feder tragenden Stiftes, und durch das Verwenden der unteren, an der Feder 60 anliegenden Fläche 66 aus mehreren Bereichen 67, 68, um die unterste Windung 60` sowohl in der normalen Bodenbearbeitungsposition als auch in der Ausweichposition senkrecht zur Mittellinie der Feder 60 zu halten, ist ein weiterer potentieller Verschleißbereich vermieden.

Im Betrieb arbeitet der Schaft 42 normalerweise in-der in den Figuren 1 und 1a durch durchgezogene Linien dargestellten Bodenbearbeitungsposition. Die unterste Windung 60` der Feder 60 ruht auf der vorderen Oberfläche 67, die im wesentlichen parallel zur oberen, an der Feder 60 anliegenden Oberfläche 20 ist, so dass die Feder 60 in ihrer vorgespannten Bodenbearbeitungsposition (durchgezogene Linien in Figur 1 und 1a) faktisch keine Verbiegungskräfte erfährt. Wenn das Werkzeug 56 auf ein Hindernis trifft, wird der Schaft 42 anfangen, auszuweichen, so dass die Feder 60 anfängt, zusammengedrückt zu werden, und der mittlere Teil der Feder 60 anfangen wird, sich nach vorn in Richtung auf den Werkzeugträger 12 zu verbiegen, da sich der Winkel der Oberfläche 67 relativ zur an der Feder 60 anliegenden Oberfläche 20 ändert. Wenn der Schaft 42 sich jedoch weiter nach oben bewegt, wird sich die unterste Windung 60` der Feder 60 von der Position, in der sie auf der vorderen Oberfläche 67 ruht, in eine Position verschwenken, in der sie auf der rückwärtigen Oberfläche 68 ruht, welche sich einer Haltung annähert, die im wesentlichen parallel zur oberen, an der Feder 60 anliegenden Oberfläche 20 ist, wobei die federverbiegenden Kräfte wesentlich reduziert werden. In der weitest möglich verschwenkten (ausgewichenen) Position ist die Oberfläche 68 im wesentlichen parallel zur Oberfläche 20, so dass die Windung 60` senkrecht zur Mittellinie durch die Feder 60 orientiert ist, und keine Verbiegungskräfte auf die Feder 60 wirken. Die Windungen der Feder 60 können daher in der maximalen Ausweichposition vollständig aufeinander aufliegen. Die einzigartige Federhalterungsanordnung optimiert daher die Effektivität der Feder 60 in der Bodenbearbeitungsposition und in der maximalen Ausweichposition und eliminiert im wesentlichen die Verbiegung der Feder und Bruchprobleme ohne Verwendung Abnutzung unterliegender Federträgerstiften oder schwenkbarer Federklammern.

Nachdem die bevorzugte Ausführungsform beschrieben wurde, ist offensichtlich, dass verschiedene Modifikationen denkbar sind, ohne den Schutzbereich der anliegenden Ansprüche zu-verlassen. Beispielsweise können mehr als zwei im Winkel zueinander angeordnete Oberflächen 67, 68 oder ein abgeflachter Übergangsbereich 69 verwendet werden, um eine stabile mittlere Stützposition für die Feder 60 bereitzustellen.

## Patentansprüche

1. Halterungsanordnung (10), die zur Befestigung an einem Werkzeugträger (12) und zur Halterung eines Bodenbearbeitungswerkzeugs (56) eingerichtet ist, mit einer spiralförmigen Feder (60), einer an einem ersten Ende der Feder (60) anliegenden Fläche (20), einem gegen die Kraft der Feder (60) aus einer Bodenbearbeitungsposition in eine Ausweichposition schwenkbaren Schaft (42), der mit dem Bodenbearbeitungswerkzeug (56) verbindbar ist, und der mit einer am zweiten Ende der Feder (60) anliegenden Fläche (66) in Wirkverbindung steht, **dadurch gekennzeichnet, dass** wenigstens eine der an einem Ende der Feder (60) anliegenden Flächen (20, 66) einen ersten Bereich (67) und einen zweiten Bereich (68) aufweist, dass der erste Bereich (67) an der Feder (60) anliegt und im wesentlichen zur am anderen Ende der Feder (60) anliegenden Fläche (20) parallel ist, wenn sich der Schaft (42) in der Bodenbearbeitungsposition befindet, und dass der zweite Bereich (68) an der Feder (60) anliegt und im wesentlichen zur am anderen Ende der Feder (60) anliegenden Fläche (20) parallel ist, wenn sich der Schaft (42) in der Ausweichposition befindet.

2. Halterungsanordnung (10) nach Anspruch 1, **gekennzeichnet durch** eine Klammer (14), die zur Befestigung am Werkzeugträger (12) eingerichtet ist, und an der der Schaft (42) an einem Schwenkbereich (18) schwenkbar gelagert ist.

3. Halterungsanordnung (10) nach Anspruch 2, **dadurch gekennzeichnet, dass** die am ersten Ende der Feder (60) anliegende Fläche (20) an der Klammer (14) vorgesehen ist.

4. Halterungsanordnung (10) nach Anspruch 2 oder 3, **dadurch gekennzeichnet, dass** sich der Schaft (42) vom Schwenkbereich (18) nach hinten und unten zu einem werkzeugtragenden Ende erstreckt, und dass das zweite Ende der Feder (60) an einer Fläche (66) des Schafts (42) anliegt, die sich hinter dem Schwenkbereich (18) und unterhalb der am ersten Ende der Feder (60) anliegenden Fläche (20) befindet.

5. Halterungsanordnung (10) nach einem der vorhergehenden Ansprüche, **dadurch gekennzeichnet, dass** die den ersten Bereich (67) und den zweiten Bereich (68) aufweisende Fläche (66), an der das zweite Ende der Feder (60) anliegt, mit dem Schaft (42) verbunden ist.

6. Halterungsanordnung (10) nach einem der vorhergehenden Ansprüche, **dadurch gekennzeichnet, dass** der erste Bereich (67) und der zweite Bereich (68) relativ zueinander fixiert sind, und dass die Feder (60) eine äußere Windung (60') aufweist, die am ersten Bereich (67) anliegt, wenn sich der Schaft (42) in der Bodenbearbeitungsposition befindet, und die am zweiten Bereich (68) anliegt, wenn sich der Schaft (42) in der Ausweichposition befindet.

7. Halterungsanordnung (10) nach einem der vorhergehenden Ansprüche, **dadurch gekennzeichnet, dass** die Feder (60) zwischen den an der Feder (60) anliegenden Flächen (20, 66) im wesentlichen offene Windungen frei von Federkontrollstrukturen aufweist.

8. Halterungsanordnung (10) nach einem der vorhergehenden Ansprüche, **dadurch gekennzeichnet, dass** der zweite Bereich (68) flächig ist.

9. Halterungsanordnung (10) nach einem der vorhergehenden Ansprüche, **dadurch gekennzeichnet, dass** der erste Bereich (67) flächig und im Winkel zum zweiten Bereich (68) angeordnet ist.

10. Halterungsanordnung (10) nach einem der vorhergehenden Ansprüche, **dadurch gekennzeichnet, dass** wenigstens eine an der Feder (60) anliegenden Fläche (20, 66) einen die Feder (60) halternden Vorsprung (90, 92) aufweist.

## Claims

1. A holder assembly (10) adapted for mounting on a toolbar (12) and for supporting a ground working tool (56), comprising a coil spring (60), a surface (20) abutting a first end of the spring (60), a shaft (42) arranged to be pivoted against the force of the spring (60) from a ground working position into a tripped position, the shaft (42) being connectable to the ground working tool (56), and being in operative connection with a surface (66) abutting the second end of the spring (60), **characterized in that** at least one of the surfaces (20, 66) abutting an end of the spring (60) has a first portion (67) and a second portion (68), the first portion (67) abutting the spring (60) and being generally parallel to the surface (20) abutting the other end of the spring (60) when the shaft (42) is in the ground engaging position, the second portion (68) abutting the spring (60) and being generally parallel to the surface (20) abutting the other end of the spring (60) when the shaft (42) is in the tripped position.

2. A holder assembly (10) according to claim 1, **characterized by** a bracket (14) adapted for securing to the toolbar (12), the bracket including a pivot area (18) on which the shaft (42) is pivotally mounted.

3. A holder assembly (10) according to claim 1 or 2, **characterized in that** the surface (20) abutting the first end of the spring (60) is provided on the bracket (14).

4. A holder assembly (10) according to claim 2 or 3, **characterized in that** the shaft (42) extends from the pivot area (18) rearwardly and downwardly to a tool-supporting end, and that the second end of the spring (60) abuts a surface (66) located at the shaft (42) rearwardly of the pivot area (18) and below the surface (20) abutting the first end of the spring (60).

5. A holder assembly (10) according to one of the preceding claims, **characterized in that** the surface (66) provided with the first portion (67) and the second portion (68) abutting the second end of the spring (60) is connected to the shaft (42).

6. A holder assembly (10) according to one of the preceding claims, **characterized in that** the first portion (67) and the second portion (68) are fixed relative to each other, and the spring (60) includes an outermost coil (60') abutting the first portion (67) when the shaft (42) is in the ground engaging position, and abutting the second portion (68) when the shaft (42) is in the tripped position.

7. A holder assembly (10) according to one of the preceding claims, **characterized in that** the spring (60) has substantially open coils free of spring control structure between the spring-abutting surfaces (20, 66).

8. A holder assembly (10) according to one of the preceding claims, **characterized in that** the second portion (68) is planar.

9. A holder assembly (10) according to one of the preceding claims, **characterized in that** the first portion (67) is planar and arranged in an angle with respect to the second portion (68).

10. A holder assembly (10) according to one of the preceding claims, **characterized in that** at least one of the surfaces (20, 66) abutting the spring (60) is provided with a projection (90, 92) holding the spring (60).

## Revendications

1. Dispositif de fixation (10) qui est agencé pour une fixation sur un porte-outil (12) et pour la fixation d'un outil de traitement du sol (56), avec un ressort en forme de spirale (60), avec une surface (20) s'appuyant sur une première extrémité du ressort (60) et avec une tige (42) qui peut être pivotée contre la force du ressort (60) d'une position de traitement du sol dans une position de dégagement, qui peut être reliée avec l'outil de traitement du sol (56) et qui est en liaison interactive avec une surface (66) s'appuyant sur la deuxième extrémité du ressort (60), **caractérisé en ce qu'**au moins une des surfaces (20, 66) s'appuyant sur une extrémité du ressort (60) comporte une première zone (67) et une deuxième zone (68), **en ce que** la première zone (67) s'appuie sur le ressort (60) et est sensiblement parallèle à la surface (20) qui s'appuie sur l'autre extrémité du ressort (60) lorsque la tige (42) se trouve dans la position de traitement du sol et **en ce que** la deuxième zone (68) s'appuie sur le ressort (60) et est sensiblement parallèle à la surface (20) qui s'appuie sur l'autre extrémité du ressort (60) lorsque la tige (42) se trouve dans la position de dégagement.

2. Dispositif de fixation (10) selon la revendication 1, **caractérisé par** une bride de fixation (14), qui est conçue pour une fixation sur le porte-outil (12) et sur laquelle la tige (42) est logée de manière pivotante dans une zone de pivotement (18).

3. Dispositif de fixation (10) selon la revendication 2, **caractérisé en ce que** la surface (20) s'appuyant sur la première extrémité du ressort (60) est prévue sur la bride de fixation (14).

4. Dispositif de fixation (10) selon la revendication 2 ou 3, **caractérisé en ce que** la tige (42) s'étend depuis la zone de pivotement (18) vers l'arrière et vers le bas en direction d'une extrémité portant un outil et **en ce que** la deuxième extrémité du ressort (60) s'appuie sur une surface (66) de la tige (42), qui se trouve derrière la zone de pivotement (18) et en dessous de la surface (20) s'appuyant sur la première extrémité du ressort (60).

5. Dispositif de fixation (10) selon l'une des revendications précédentes, **caractérisé en ce que** la surface (66) comprenant la première zone (67) et la deuxième zone (68), sur laquelle s'appuie la deuxième extrémité du ressort (60), est reliée à la tige (42).

6. Dispositif de fixation (10) selon l'une des revendications précédentes, **caractérisé en ce que** la première zone (67) et la deuxième zone (68) sont fixées l'une par rapport à l'autre et **en ce que** le ressort (60) comprend une spire extérieure (60') qui s'appuie sur la première zone (67) lorsque la tige (42) se trouve dans la position de traitement du sol et qui s'appuie sur la deuxième zone (68) lorsque la tige (42) se trouve dans la position de dégagement.

7. Dispositif de fixation (10) selon l'une des revendications précédentes, **caractérisé en ce que** le ressort (60) comprend entre les surfaces (20, 66) s'appuyant sur le ressort (60) pour l'essentiel des spires ouvertes exemptes de structures de contrôle du ressort.

8. Dispositif de fixation (10) selon l'une des revendications précédentes, **caractérisé en ce que** la deuxième zone (68) est plate.

9. Dispositif de fixation (10) selon Tune des revendications précédentes, **caractérisé en ce que** la première zone (67) est plate et est disposée avec un angle par rapport à la deuxième zone (68).

10. Dispositif de fixation (10) selon l'une des revendications précédentes, **caractérisé en ce qu'**au moins une surface (20, 66) s'appuyant sur le ressort (60) comprend une avancée (90, 92) maintenant le ressort (60).
